# EUROPÄISCHE PATENTANMELDUNG

(11) **EP 3 842 781 A1**
(43) Veröffentlichungstag der Anmeldung: **30.06.2021**
(21) Anmeldenummer: 20216411.7
(22) Anmeldetag: 22.12.2020
(51) Int. Cl.: G01N 1/10

(54) **BEPROBUNGSVORRICHTUNG ZUR SICHEREN ENTNAHME VON FLUIDEN**

(30) Priorität: 23.12.2019 DE 102019135704
(71) Anmelder: SGS Germany GmbH, 20459 Hamburg (DE)
(72) Erfinder: Brosig, Patrick, 20459 Hamburg (DE); Bare, Christopher, 20459 Hamburg (DE)
(74) Vertreter: RGTH

(57) **Zusammenfassung**

Offenbart ist eine Beprobungsvorrichtung (100) zur Entnahme von einem Fluid aus einem zu beprobenden Behälter (20), aufweisend einen Einlass (30), welcher über eine Einlassleitung (31) mit einem behälterseitigen Fluidanschluss (21) verbindbar ist, aufweisend einen Auslass (40), welcher über eine Auslassleitung (41) mit einem behälterseitigen Rückführungsanschluss (22) verbindbar ist, wobei der Einlass (30) und der Auslass (40) über eine Bypassleitung (50) miteinander verbindbar sind und die Bypassleitung (50) durch mindestens ein Ventil (51) absperrbar ist, wobei parallel zu der Bypassleitung (50) mindestens ein Probenahmezylinder (70) mit dem Einlass (30) und dem Auslass (40) verbindbar ist, wobei der Einlass (30) und/oder der Auslass (40) ein Schauglas (32, 42) zum visuellen Beobachten des Fluids aufweist. Des Weiteren ist ein Verfahren zum Entnehmen einer Fluidprobe in einem Probenahmezylinder (70, 71) offenbart.

## Beschreibung

Die Erfindung betrifft eine Beprobungsvorrichtung zur Entnahme von einem Fluid aus einem zu beprobenden Behälter, aufweisend einen Einlass, welcher über eine Einlassleitung mit einem behälterseitigen Fluidanschluss verbindbar ist, und aufweisend einen Auslass, welcher über eine Auslassleitung mit einem behälterseitigen Rückführungsanschluss verbindbar ist. Des Weiteren betrifft die Erfindung ein Verfahren zum Entnehmen einer Fluidprobe in einem Probenahmezylinder.

Zum Durchführen von Analysen von Gasen wird üblicherweise ein Gas aus einem Behälter, wie beispielsweise einem Schiffstank, in einen Probenahmezylinder geleitet. Ein mit dem zu beprobenden Gas gefüllter Probenahmezylinder wird anschließend verschlossen und für eine Analyse einem Labor übergeben.

Eine Entnahme von Gasen mittels Probenahmezylinder erfolgt über eine Schlauchverbindung, welche den Probenahmezylinder mit dem Behälter koppelt. Hierzu wird das Gas über die Schlauchverbindung und den Probenahmezylinder in die Umwelt geleitet, bis die Flüssigphase aus dem Auslassventil des Probenahmezylinders austritt. Um einen Probenahmezylinder mit einem Volumen von 1 L mit dem Gas in flüssiger Phase zu befüllen, können bis zu 300 L Gas in die Atmosphäre entweichen.

Wegen der hohen entweichenden Menge an Gas können Probenahmen von gefährlichen bzw. giftigen Gasen, wie beispielsweise Vinylchloridmonomer oder Ammoniak üblicherweise nicht durchgeführt werden, da ein derartiges Vorgehen den Probenehmer und die Umwelt gefährden kann. Des Weiteren kann aufgrund der hohen Verlustmenge an Gas eine derartige Beprobung kostenintensiv sein.

Der Erfindung liegt die Aufgabe zugrunde, eine Beprobungsvorrichtung und ein Verfahren zum Entnehmen einer Probe zu schaffen, welche umweltfreundlich sind und ein Freisetzen von gesundheitsschädlichen Fluiden verhindern.

Diese Aufgabe wird durch die im Anspruch 1 und Anspruch 10 angegebenen Merkmale gelöst. Weitere vorteilhafte Ausgestaltungen der Erfindung sind in den Unteransprüchen beschrieben.

Gemäß einem Aspekt der Erfindung wird eine Beprobungsvorrichtung zur Entnahme von einem Fluid bzw. einer Fluidprobe aus einem zu beprobenden Behälter bereitgestellt. Die Beprobungsvorrichtung weist einen Einlass, welcher über eine Einlassleitung mit einem behälterseitigen Fluidanschluss verbindbar ist, und einen Auslass, welcher über eine Auslassleitung mit einem behälterseitigen Rückführungsanschluss verbindbar ist, auf.

Der Einlass und der Auslass der Beprobungsvorrichtung sind über eine Bypassleitung miteinander verbindbar. Die Bypassleitung ist durch mindestens ein Ventil absperrbar. Hierzu kann die Bypassleitung einlassseitig ein Absperrventil aufweisen. Die Bypassleitung kann auslassseitig ein weiteres Absperrventil oder ein Rückschlagventil aufweisen. Es kann hierdurch ein geschlossener Kreislauf mit dem Behälter ausgebildet werden, welcher ein zu beprobendes Fluid enthält.

Es ist mindestens ein Probenahmezylinder parallel zu der Bypassleitung mit dem Einlass und dem Auslass verbindbar, wobei der Einlass und/oder der Auslass ein Schauglas zum visuellen Beobachten des Fluids aufweist. Hierdurch können durch die Beprobungsvorrichtung beispielsweise mehrere Probenahmezylinder mit einem Fluid befüllt und für eine Analyse bereitgestellt werden.

Mehrere Probenahmezylinder können hierbei seriell oder parallel zueinander mit dem Einlass und dem Auslass fluidleitend gekoppelt und mit dem Fluid gefüllt werden.

Es kann beispielsweise ein Schauglas am Auslass und ein Schauglas am Einlass der Beprobungsvorrichtung angeordnet sein. Durch die Verwendung von Schaugläsern kann das in die Leitungen der Beprobungsvorrichtung hineinströmende und anschließend hinausströmende Fluid visuell wahrgenommen werden. Hierdurch kann technisch einfach ein Gleichgewichtszustand des Fluids bei der Probenahme erkannt und eine besonders intuitive Probennahme ermöglicht werden.

Aufgrund der Ausbildung eines geschlossenen Kreislaufs zwischen dem Behälter und der Beprobungsvorrichtung können Fluidproben nahezu emissionslos entnommen werden. Die Beprobungsvorrichtung ermöglicht somit auch die Entnahme von gefährlichen bzw. giftigen Fluiden. Darüber hinaus führt die Beprobungsvorrichtung zu einer erhöhten Sicherheit des Probenehmers und von Personal. Da die in die Umwelt entweichende Menge des zu beprobenden Fluids durch die erfindungsgemäße Beprobungsvorrichtung minimiert wird, können schädliche Auswirkungen auf die Umwelt sowie Streuverluste verringert werden.

Das zu beprobende Fluid kann beispielsweise ein Gas oder eine Flüssigkeit sein. Insbesondere kann das Fluid ein kryogen gelagertes Gas sein.

Die Beprobungsvorrichtung kann grundsätzlich an beliebigen Gasbehältern, Druckbehältern oder Flüssigkeitsbehältern zur Entnahme von Proben eingesetzt werden. Derartige Behälter können beispielsweise Schiffstanks, Kesselwagen, Tankwagen, Biogasanlagen und dergleichen sein. Des Weiteren ist auch eine Verwendung der Beprobungsvorrichtung im Bereich von Produktionsanlagen, wie beispielsweise Raffinerien und Tanklagern, möglich.

Die Beprobung von Fluiden kann besonders flexibel erfolgen, wenn die Beprobungsvorrichtung als eine mobile Einheit, insbesondere als ein tragbarer Koffer, ausgestaltet ist.

Gemäß einem weiteren Ausführungsbeispiel weist die Beprobungsvorrichtung mindestens eine mit dem Einlass verbundene Zylindereinlassleitung und mindestens eine mit dem Auslass verbundene Zylinderauslassleitung auf, welche parallel zu der Bypassleitung angeordnet sind und jeweils ein Absperrventil aufweisen, wobei der Probenahmezylinder fluidleitend mit der Zylindereinlassleitung und der Zylinderauslassleitung verbindbar ist. Durch die Zylindereinlassleitung und die Zylinderauslassleitung kann eine Schnittstelle zum Aufnehmen eines Probenahmezylinders bereitgestellt werden. Hierdurch kann der Probenahmezylinder technisch einfach in die Beprobungsvorrichtung fluidleitend eingebunden werden.

Der Probenahmezylinder kann vielseitig fluidleitend mit der Beprobungsvorrichtung verbunden werden, wenn er unmittelbar mit der Zylindereinlassleitung und der Zylinderauslassleitung oder über Verbindungsleitungen mit der Zylindereinlassleitung und der Zylinderauslassleitung verbindbar ist. Diese Maßnahme ermöglicht eine flexible Anordnung der Leitungen und der Aufnahmeposition des mindestens einen Probenahmezylinders in der Beprobungsvorrichtung.

Nach einer weiteren Ausführungsform sind mehrere Probenahmezylinder über mehrere parallel zueinander angeordnete und gemeinsam oder jeweils separat mit dem Einlass und/oder dem Auslass verbundene Zylindereinlassleitungen und Zylinderauslassleitungen verbindbar. Die Beprobungsvorrichtung kann somit zum gleichzeitigen Erlangen von einer Vielzahl von Proben verwendet werden. Die jeweiligen Probenahmezylinder können gleichzeitig oder nacheinander mit dem zu beprobenden Fluid befüllt werden.

Alternativ oder zusätzlich können mehrere Probenahmezylinder vorgesehen sein, um eine schnelle und effiziente Beprobung von mehreren Behältern mit unterschiedlichen Fluiden zu ermöglichen.

Der mindestens eine Probenahmezylinder kann technisch besonders einfach mit dem zu beprobenden Fluid befüllt und anschließend aus der Beprobungsvorrichtung entnommen werden, wenn der Probenahmezylinder einen verschließbaren zylinderseitigen Einlass und einen verschließbaren zylinderseitigen Auslass aufweist. Beispielsweise kann an dem Einlass und dem Auslass jeweils ein Absperrventil an dem Probenahmezylinder befestigt sein.

Alternativ oder zusätzlich kann der zylinderseitige Einlass als ein Rückschlagventil ausgestaltet sein, welches ein Entweichen des Fluids aus dem Probenahmezylinder verhindert.

Gemäß einer weiteren Ausführungsform ist der mindestens eine Probenahmezylinder aus der Zylinderauslassleitung und der Zylindereinlassleitung entkoppelbar, wenn die Zylinderauslassleitung, die Zylindereinlassleitung, der zylinderseitige Einlass und der zylinderseitige Auslass durch Ventile gesperrt sind. Hierdurch kann jeder Probenahmezylinder separat an die Zylindereinlassleitungen und die Zylinderausleitungen angeschlossen oder abgekoppelt werden. Insbesondere kann durch diese Maßnahme ein unbeabsichtigtes Entkoppeln des Probenahmezylinders in einem geöffneten Zustand des Probenahmezylinders und ein anschließendes Freisetzen des Fluids in die Atmosphäre verhindert werden.

Eine Strömung eines in die Beprobungsvorrichtung hineinströmenden Fluids und eines aus der Beprobungsvorrichtung herausströmenden Fluids kann visuell geprüft werden, wenn der Einlass, der Auslass, die mindestens eine Zylindereinlassleitung, die mindestens eine Zylinderauslassleitung und/oder die Bypassleitung an mindestens einer Position ein Sichtfenster / Schauglas aufweisen.

Nach einer weiteren Ausführungsform ist die Beprobungsvorrichtung mit einem Fluiddruck von bis einschließlich 100 bar und mit einer minimalen Fluidtemperatur von bis einschließlich -175°C betreibbar. Eine derartige Temperaturbeständigkeit und Druckfestigkeit kann vorzugsweise vor einer Auslieferung geprüft und zertifiziert werden. Durch einen derartigen Temperaturbereich und Druckbereich können auch unter Hochdruck gelagerte Fluide und kryogene Fluide durch die Beprobungsvorrichtung beprobt werden. Der Einsatzbereich der Beprobungsvorrichtung kann somit zusätzlich ausgeweitet werden. Beispielsweise kann die Beprobungsvorrichtung in einem mit dem Behälter gekoppelten Zustand in einem Temperaturbereich von -28°C bis +150°C mit über 97 bar Überdruck zum Entnehmen von Proben betrieben werden.

Gemäß einem weiteren Aspekt der Erfindung wird ein Verfahren zum Entnehmen einer Fluidprobe in einem Probenahmezylinder mit einer erfindungsgemäßen Beprobungsvorrichtung bereitgestellt.

In einem Schritt wird ein Einlass der Beprobungsvorrichtung mit einem Fluidanschluss eines Behälters mit einem zu beprobenden Fluid leitend verbunden. Des Weiteren wird ein Auslass der Beprobungsvorrichtung mit einer Fluidrückführung des Behälters leitend verbunden.

In einem weiteren Schritt wird mindestens ein Probenahmezylinder in die Beprobungsvorrichtung eingesetzt und mit einer verschlossenen Zylindereinlassleitung und einer verschlossenen Zylinderauslassleitung verbunden. Hierbei kann der Probenahmezylinder einen geöffneten zylinderseitigen Einlass und Auslass aufweisen. Alternativ kann der zylinderseitige Einlass und der zylinderseitige Auslass nach einem Koppeln des Probenahmezylinders mit der Beprobungsvorrichtung geöffnet werden.

Eine parallel zum mindestens einen Probenahmezylinder verlaufende Bypassleitung wird durch ein Öffnen des Einlasses und des Auslasses mit dem Fluid gefüllt. Während des Befüllens der Beprobungsvorrichtung mit dem Fluid kann ein Fluidfluss durch mindestens ein Schauglas beobachtet werden. Insbesondere kann ein in die Beprobungsvorrichtung hineinfließendes Fluid und/oder ein aus der Beprobungsvorrichtung hinausfließendes Fluid durch das mindestens eine Schauglas visuell überwacht werden. Das mindestens eine Schauglas kann als eine Kammer mit einem Glasfenster ausgestaltet sein, durch welche sich mindestens eine Leitung der Beprobungsvorrichtung erstreckt. Alternativ kann das Schauglas als ein Leitungsabschnitt ausgestaltet sein, welcher zumindest bereichsweise aus einem durchsichtigen Material besteht.

Nach einem Spülen des Einlasses und des Auslasses mit dem Fluid wird die Bypassleitung durch mindestens ein Absperrventil geschlossen und der mindestens eine Probenahmezylinder zum Aufnehmen des Fluids geöffnet.

In einem weiteren Schritt werden nach einem vollständigen Durchfließen und somit einem Füllen des Probenahmezylinders mit dem Fluid die Zylindereinlassleitung, die Zylinderauslassleitung, ein zylinderseitiger Einlass und ein zylinderseitiger Auslass gesperrt. Anschließend kann der Probenahmezylinder aus der Beprobungsvorrichtung entnommen werden. In einem weiteren Schritt kann der Probenahmezylinder beispielsweise einem Labor zur Durchführung einer Analyse bereitgestellt werden.

Eine in der Beprobungsvorrichtung nach der Probenahme verbleibende Menge an Fluid kann reduziert werden, wenn nach einem Entnehmen des Probenahmezylinders aus der Beprobungsvorrichtung und vor einem Abkoppeln der Beprobungsvorrichtung von dem Behälter der Fluidanschluss des Behälters geschlossen und der Einlass, die Bypassleitung und der Auslass mit einem Spülgas gereinigt werden. Somit bietet die Beprobungsvorrichtung die Möglichkeit einer Reinigung der Leitungen nach der durchgeführten Probenentnahme. Hierzu kann das Spülgas kontrolliert in die Leitungen, insbesondere in den Einlass der Beprobungsvorrichtung, hineingeführt werden. Das eingeleitete Spülgas kann mit dem restlichen Fluid in den Rückführungsanschluss des Behälters geleitet werden.

Das Spülgas kann ein Edelgas oder ein anderes Gas, wie beispielsweise Stickstoff, sein.

Nachstehend werden mehrere Ausführungsbeispiele der Erfindung anhand der Zeichnungen näher erläutert. Es zeigen:
- Fig. 1: eine schematische Darstellung einer Anordnung mit einer Beprobungsvorrichtung gemäß einer Ausführungsform und einem Behälter, und
- Fig. 2: ein Ablaufdiagramm zum Veranschaulichen des Verfahrens gemäß einer Ausführungsform.

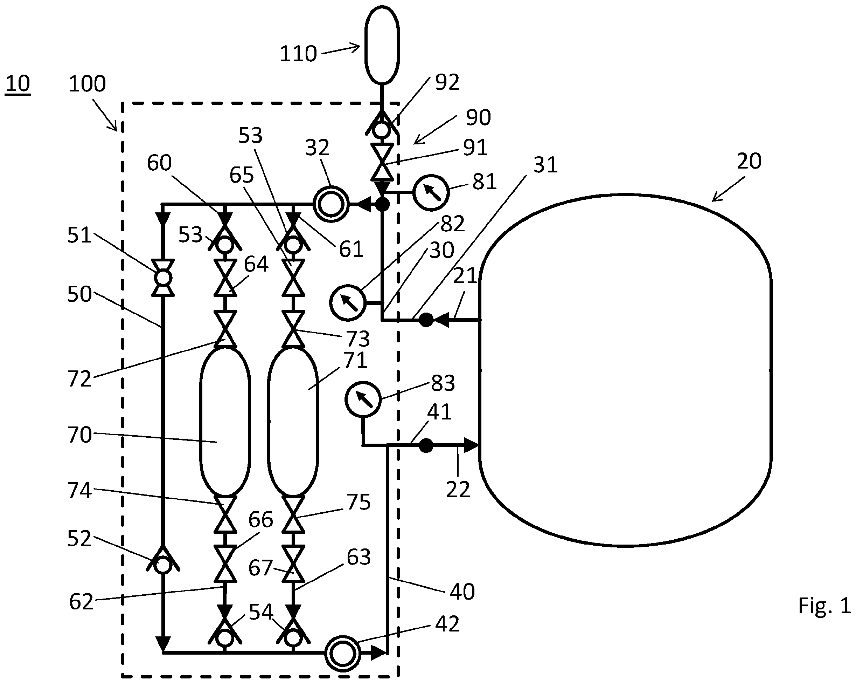

Die Fig. 1 zeigt eine schematische Darstellung einer Anordnung 10 mit einer Beprobungsvorrichtung 100 gemäß einer Ausführungsform und einem Behälter 20. Die Beprobungsvorrichtung 100 ist mit dem Behälter 20 fluidleitend verbunden. Der Behälter 20 kann beispielsweise ein stationärer Tank, wie beispielsweise Landtank, oder ein mobiler Tank, wie beispielsweise ein Schiffstank, sein.

Die Beprobungsvorrichtung 100 weist einen Einlass 30 und einen Auslass 40 auf. Der Einlass 30 ist mit einem behälterseitigen Fluidanschluss 21 verbunden. Der Auslass 40 ist mit einem behälterseitigen Rückführungsanschluss 22 fluidleitend verbunden. Der Einlass 30 ist über einen Verbindungsschlauch 31 mit dem Fluidanschluss 21 gekoppelt. Der Auslass 40 der Beprobungsvorrichtung 100 ist ebenfalls über einen Verbindungsschlauch 41 mit dem Rückführungsanschluss 22 des Behälters verbunden.

Der Einlass 30 kann das in die Beprobungsvorrichtung 100 hineingeleitete Fluid über ein erstes Schauglas 32 zu einer Bypassleitung 50 führen. Durch das erste Schauglas 32 kann eine visuelle Prüfung durchgeführt werden, welche ein in die Beprobungsvorrichtung 100 hineinströmendes Fluid bestätigt. Die Pfeile veranschaulichen die möglichen Strömungsrichtungen des Fluids.

Die Bypassleitung 50 kann über ein Absperrventil 51 gesperrt werden. Das Absperrventil 51 befindet sich hierbei am Anfang der Bypassleitung 50 und ist als ein Kugelhahn ausgestaltet. Am Ende der Bypassleitung 50 ist ein Rückschlagventil 52 angeordnet. Das Rückschlagventil 52 kann alternativ als ein zweites Absperrventil ausgestaltet sein. Durch das Rückschlagventil 52 kann ein unbeabsichtigtes Hineinfließen des Fluids in die Bypassleitung 50 unterbunden werden.

Die Bypassleitung 50 verbindet den Einlass 30 mit dem Auslass 40. Am Auslass 40 ist ein zweites Schauglas 42 angeordnet, durch welches ein aus der Beprobungsvorrichtung 100 hinausströmendes Fluid durch den Probenehmer visuell wahrgenommen werden kann. Die Beprobungsvorrichtung 100 bildet mit dem Behälter 20 einen geschlossenen Kreislauf.

Parallel zu der Bypassleitung 50 sind beispielhaft zwei Anschlüsse mit zwei eingesetzten Probenahmezylindern 70, 71 angeordnet. Jeder Anschluss besteht aus einer mit dem Einlass 30 verbundenen Zylindereinlassleitung 60, 61 und aus einer mit dem Auslass 40 verbundenen Zylinderauslassleitung 62, 63.

Die Zylindereinlassleitungen 60, 61 und die Zylinderauslassleitungen 62, 63 weisen jeweils ein Absperrventil 64, 65, 66, 67 auf. Alternativ können die Zylinderauslassleitungen 62, 63 anstelle der Absperrventile 66, 67 Rückschlagventile aufweisen. Des Weiteren sind die Anschlüsse bzw. die Zylindereinlassleitungen 60, 61 und die Zylinderauslassleitungen 62, 63 der Probenahmezylinder 70, 71 jeweils durch ein Rückschlagventil 53, 54 gesichert.

Durch die Rückschlagventile 53 an den Zylindereinlassleitungen 60, 61 kann ein in die Probenahmezylinder 70, 71 hineinströmendes Fluid nicht mehr in Richtung des Einlasses 30 entweichen. Darüber hinaus kann bei einem Überbrücken der Probenahmezylinder 70, 71 durch den Einsatz von Rückschlagventilen 54 an den Zylinderauslassleitungen 62, 63 ein Entweichen des Fluids in die Probenahmezylinder 70, 71 verhindert werden.

Die Probenahmezylinder 70, 71 können beidseitig geöffnet werden, wodurch ein Durchfluss durch die Probenahmezylinder 70, 71 zum vollständigen Befüllen mit dem Fluid ermöglicht wird. Zum Bevorraten des Fluids in dem jeweiligen Probenahmezylinder 70, 71 ist jeweils ein zylinderseitiger Einlass 72, 73 und ein zylinderseitiger Auslass 74, 75 vorgesehen. Die zylinderseitigen Einlässe 72, 73 und die zylinderseitigen Auslässe 74, 75 sind als Absperrventile ausgestaltet.

Zum Ermitteln eines Drucks des Fluids und zum Überwachen der Beprobungsvorrichtung 100 sind mehrere Manometer 81, 82, 83 vorgesehen. Ein erstes Manometer 81 ist an einem Spülgasanschluss 90 angeschlossen. Ein zweites Manometer 82 ist am Einlass 30 der Beprobungsvorrichtung 100 angeschlossen. Ein drittes Manometer 83 ist am Auslass 40 der Beprobungsvorrichtung 100 angeschlossen.

Durch den Spülgasanschluss 90 kann die Beprobungsvorrichtung 100 zu Reinigungszwecken mit einem Inertgas gespült werden. Hierzu kann der Spülgasanschluss 90 ein Absperrventil 91 und ein optionales Rückschlagventil 92 aufweisen. An dem Spülgasanschluss 90 kann eine Gasflasche 110, beispielsweise zum Bereitstellen eines Stickstoffs als Spülgas, angeschlossen werden.

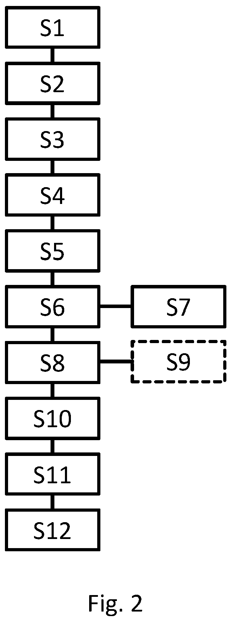

In der Fig. 2 ist ein Ablaufdiagramm zum Veranschaulichen des Verfahrens gemäß einer Ausführungsform dargestellt.

Zur Durchführung einer Probenentnahme wird in einem Schritt S1 der Auslass 40 der Beprobungsvorrichtung 100 mit einem Rückführungsanschluss 22 eines Behälters 20 mit einem zu beprobenden Fluid verbunden. Der Rückführungsanschluss 22 kann beispielsweise eine Gasrückführungsleitung sein.

In einem weiteren Schritt S2 wird der Einlass 30 der Beprobungsvorrichtung 100 mit einem behälterseitigen Fluidanschluss 21 fluidleitend gekoppelt. Anschließend kann mindestens ein Probenahmezylinder 70 über die Zylindereinlassleitung 60 und die Zylinderauslassleitung 62 mit der Beprobungsvorrichtung verbunden S3 werden. Die Absperrventile 64, 66 entkoppeln hier vorerst den Probenahmezylinder 70 von einem in die Beprobungsvorrichtung 100 hineingeführten Fluid.

Die Beprobungsvorrichtung 100 wird auf eine Ventilstellung "Probenahme" eingestellt S4. Hierbei können vorzugsweise der behälterseitige Fluidanschluss 21 und der behälterseitige Rückführungsanschluss 22 geöffnet werden. Bei geschlossenen Absperrventilen 64, 66 in dem Anschluss des Probenahmezylinders 70 erfolgt hierbei ein Öffnen des Absperrventils 51 der Bypassleitung 50. Hierdurch kann das in die Beprobungsvorrichtung 100 einströmende Fluid um den Probenahmezylinder 70 herum durch die Bypassleitung 50 geleitet und über die Rücklaufleitung bzw. den Auslass 40 der Beprobungsvorrichtung 100 in den Behälter 20 zurückgeleitet werden.

Der Einlass 72 und der Auslass 74 des Probenahmezylinders 70 bleiben vorerst geschlossen. Die Absperrventile 64, 66 des Probenahmezylinders 70 können hierbei bereits geöffnet werden. Somit kann die Beprobungsvorrichtung 100 durch das Fluid zuerst gespült S6 werden.

Während des Spülvorgangs der Beprobungsvorrichtung 100 kann die Fluidströmung durch die Schaugläser 32, 42 visuell beobachtet S7 werden. Zum Prüfen eines Drucks des Fluids kann zumindest eines der Manometer 81, 82, 83 ebenfalls berücksichtigt werden.

Werden die Absperrventile 64, 66 des Probenahmezylinders 70 geöffnet, kann das zu beprobende Fluid durch den Probenahmezylinder 70 hindurch strömen. Hierzu kann das Absperrventil 51 der Bypassleitung 50 gesperrt werden. Hierdurch kann die Probenentnahme beginnen S8. Ein Rückschlagventil 52 in der Bypassleitung 50 verhindert ein Einströmen des Fluids in die Bypassleitung 50.

Je nach Ausgestaltung des Behälters 20 und des zu beprobenden Fluids können in einem optionalen Schritt S9 nicht dargestellte behälterseitige Hilfspumpen eingeschaltet werden. Beispielsweise kann eine Schiffspumpe bei einem als Schiffstank ausgestalteten Behälter 20 aktiviert werden. Der Einsatz der Pumpe kann dazu verwendet werden, das Fluid über den behälterseitigen Rückführungsanschluss 22 anzusaugen. Dies kann bei Fluiden vorteilhaft sein, welche aus eigener Kraft den hydrostatischen Druck und die damit verbundene Gassäule nicht überbrücken können. Beispielsweise können derartige Fluide schwerer als Luft sein.

In einem weiteren Schritt S10 werden die Absperrventile 64, 66, der Einlass 72 und der Auslass 74 des Probenahmezylinders 70 geschlossen. Hierzu kann die Beprobungsvorrichtung 100 auf eine Ventilstellung "Geschlossen" eingestellt werden. Es kann somit verhindert werden, dass selbst wenn die Beprobungsvorrichtung 100 an den behälterseitigen Fluidanschluss 21 und an den behälterseitigen Rückführungsanschluss angeschlossen ist, das Fluid in die Beprobungsvorrichtung 100 gelangen kann. Diese Schließstellung kann auch durch Prüfen der Manometer 81, 82, 83 geprüft werden. Anschließend kann die Pumpe deaktiviert und der behälterseitige Fluidanschluss 21 geschlossen werden.

Des Weiteren kann ein Spülvorgang S11 mit einem Spülgas eingeleitet werden. Hierzu kann eine entsprechende Spülgasflasche 110 an dem Einlass 30 oder einem hierfür vorgesehenen Spülgasanschluss 90 angeschlossen werden. Durch ein anschließendes Öffnen der Spülgasflasche 110 und der Bypassleitung 50 kann die gesamte Beprobungsvorrichtung 100 beispielsweise mit Stickstoff gereinigt werden. Das Spülgas kann mit Resten des Fluids in den behälterseitigen Rückführungsanschluss 22 hinausgeleitet werden. Der Einlass 72 und der Auslass 74 des Probenahmezylinders 70 bleiben hierbei geschlossen. Der Spülvorgang durch das Spülgas drückt das Fluid nahezu vollständig in den Behälter 20, sodass die in die Atmosphäre freigesetzte Menge des Fluids minimiert wird.

In einem anschließenden Schritt S12 können die Verbindungsschläuche 31, 41 getrennt und der mit dem Fluid vollständig gefüllte Probenahmezylinder 70 aus der Beprobungsvorrichtung 100 entnommen werden.

### Bezugszeichenliste

- 100: Beprobungsvorrichtung
- 110: Gasflasche / Spülgasflasche

- 10: Anordnung

- 20: Behälter
- 21: behälterseitiger Fluidanschluss
- 22: behälterseitiger Rückführungsanschluss

- 30: Einlass
- 31: einlassseitiger Verbindungsschlauch / Einlassleitung
- 32: erstes Schauglas

- 40: Auslass
- 41: auslassseitiger Verbindungsschlauch / Auslassleitung
- 42: zweites Schauglas

- 50: Bypassleitung
- 51: Absperrventil der Bypassleitung / Kugelhahn
- 52: Rückschlagventil der Bypassleitung
- 53: Rückschlagventil einer Zylindereinlassleitung
- 54: Rückschlagventil einer Zylinderauslassleitung

- 60: Zylindereinlassleitung für den ersten Probenahmezylinder
- 61: Zylindereinlassleitung für den zweiten Probenahmezylinder
- 62: Zylinderauslassleitung für den ersten Probenahmezylinder
- 63: Zylinderauslassleitung für den zweiten Probenahmezylinder
- 64: Absperrventil der ersten Zylindereinlassleitung
- 65: Absperrventil der zweiten Zylindereinlassleitung
- 66: Absperrventil der ersten Zylinderauslassleitung
- 67: Absperrventil der zweiten Zylinderauslassleitung
- 70: erster Probenahmezylinder
- 71: zweiter Probenahmezylinder
- 72: zylinderseitiger Einlass für den ersten Probenahmezylinder
- 73: zylinderseitiger Einlass für den zweiten Probenahmezylinder
- 74: zylinderseitiger Auslass für den ersten Probenahmezylinder
- 75: zylinderseitiger Auslass für den zweiten Probenahmezylinder

- 81: erster Manometer am
- 82: zweiter Manometer am Einlass 30
- 83: dritter Manometer

- 90: Spülgasanschluss
- 91: Absperrventil des Spülgasanschlusses
- 92: Rückschlagventil

## Patentansprüche

1. Beprobungsvorrichtung (100) zur Entnahme von einem Fluid aus einem zu beprobenden Behälter (20), aufweisend einen Einlass (30), welcher über eine Einlassleitung (31) mit einem behälterseitigen Fluidanschluss (21) verbindbar ist, und aufweisend einen Auslass (40), welcher über eine Auslassleitung (41) mit einem behälterseitigen Rückführungsanschluss (22) verbindbar ist, wobei der Einlass (30) und der Auslass (40) über eine Bypassleitung (50) miteinander verbindbar sind und die Bypassleitung (50) durch mindestens ein Ventil (51) absperrbar ist, **dadurch gekennzeichnet, dass** parallel zu der Bypassleitung (50) mindestens ein Probenahmezylinder (70) mit dem Einlass (30) und dem Auslass (40) verbindbar ist, wobei der Einlass (30) und/oder der Auslass (40) ein Schauglas (32, 42) zum visuellen Beobachten des Fluids aufweist.

2. Beprobungsvorrichtung nach Anspruch 1, wobei die Beprobungsvorrichtung (100) als eine mobile Einheit, insbesondere als ein tragbarer Koffer, ausgestaltet ist.

3. Beprobungsvorrichtung nach Anspruch 1 oder 2, wobei die Beprobungsvorrichtung (100) mindestens eine mit dem Einlass (30) verbundene Zylindereinlassleitung (60) und mindestens eine mit dem Auslass (40) verbundene Zylinderauslassleitung (62) aufweist, welche parallel zu der Bypassleitung (50) angeordnet sind und jeweils ein Absperrventil (64, 66) aufweisen, wobei der Probenahmezylinder (70) fluidleitend mit der Zylindereinlassleitung (60) und der Zylinderauslassleitung (62) verbindbar ist.

4. Beprobungsvorrichtung nach einem der Ansprüche 1 bis 3, wobei der mindestens eine Probenahmezylinder (70) unmittelbar mit der Zylindereinlassleitung (60) und der Zylinderauslassleitung (62) oder über Verbindungsleitungen mit der Zylindereinlassleitung (60) und der Zylinderauslassleitung (62) verbindbar ist.

5. Beprobungsvorrichtung nach einem der Ansprüche 1 bis 4, wobei mehrere Probenahmezylinder (70, 71) über mehrere parallel zueinander angeordnete und gemeinsam oder jeweils separat mit dem Einlass (30) und/oder dem Auslass (40) verbundene Zylindereinlassleitungen (60, 61) und Zylinderauslassleitungen (62, 63) verbindbar sind.

6. Beprobungsvorrichtung nach einem der Ansprüche 1 bis 5, wobei der Probenahmezylinder (70) einen verschließbaren zylinderseitigen Einlass (72) und einen verschließbaren zylinderseitigen Auslass (74) aufweist.

7. Beprobungsvorrichtung nach Anspruch 6, wobei der mindestens eine Probenahmezylinder (70) aus der Zylinderauslassleitung (62) und der Zylindereinlassleitung (60) entkoppelbar ist, wenn die Zylinderauslassleitung (62), die Zylindereinlassleitung (60), der zylinderseitige Einlass (72) und der zylinderseitige Auslass (74) durch Ventile gesperrt sind.

8. Beprobungsvorrichtung nach einem der Ansprüche 1 bis 7, wobei der Einlass (30), der Auslass (40) der Beprobungsvorrichtung (100), die mindestens eine Zylindereinlassleitung (60), die mindestens eine Zylinderauslassleitung (62) und/oder die Bypassleitung (50) an mindestens einer Position ein Schauglas (32, 42) aufweisen.

9. Beprobungsvorrichtung nach einem der Ansprüche 1 bis 8, wobei die Beprobungsvorrichtung (100) mit einem Fluiddruck von bis einschließlich 100 bar und mit einer minimalen Fluidtemperatur von bis einschließlich -175°C betreibbar ist.

10. Verfahren zum Entnehmen einer Fluidprobe in mindestens einem Probenahmezylinder (70, 71) mit einer Beprobungsvorrichtung (100) gemäß einem der vorhergehenden Ansprüche, wobei
- ein Einlass (30) der Beprobungsvorrichtung (100) mit einem Fluidanschluss (21) eines Behälters (20) mit einem zu beprobenden Fluid leitend verbunden wird,
- ein Auslass (40) der Beprobungsvorrichtung (100) mit einem Rückführungsanschluss (22) des Behälters (20) leitend verbunden wird,
- mindestens ein Probenahmezylinder (70, 71) in die Beprobungsvorrichtung (100) eingesetzt und mit einer verschlossenen Zylindereinlassleitung (60) und einer verschlossenen Zylinderauslassleitung (62) verbunden wird,
- eine parallel zum mindestens einen Probenahmezylinder (70, 71) verlaufende Bypassleitung (50) durch ein Öffnen des Einlasses (30) und des Auslasses (40) mit dem Fluid gefüllt und ein Fluidfluss durch mindestens ein Schauglas (32, 42) beobachtet wird,
- nach einem Spülen des Einlasses (30) und des Auslasses (40) mit dem Fluid die Bypassleitung (50) durch mindestens ein Absperrventil (51) geschlossen und der mindestens eine Probenahmezylinder (70, 71) zum Aufnehmen des Fluids geöffnet wird,
- nach einem vollständigen Durchfließen des Probenahmezylinders (70, 71) mit dem Fluid, die Zylindereinlassleitung (60), die Zylinderauslassleitung (62), ein zylinderseitiger Einlass (72) und ein zylinderseitiger Auslass (74) gesperrt werden und der Probenahmezylinder (70, 71) aus der Beprobungsvorrichtung (100) entnommen wird.

11. Verfahren nach Anspruch 10, wobei nach einem Entnehmen des Probenahmezylinders (70) aus der Beprobungsvorrichtung (100) und vor einem Abkoppeln der Beprobungsvorrichtung (100) von dem Behälter (20) der behälterseitige Fluidanschluss (21) des Behälters (20) geschlossen und der Einlass (30), die Bypassleitung (50) und der Auslass (40) mit einem Spülgas gereinigt werden.
